Europäisches Patentamt

European Patent Office

Office européen des brevets

(19)

(11) Publication number: **0 114 715**

**A1**

(12) # EUROPEAN PATENT APPLICATION

(21) Application number: **84200067.1**

(22) Date of filing: **20.01.84**

(51) Int. Cl.³: **A 23 N 15/08**

(30) Priority: **21.01.83 NL 8300221**

(43) Date of publication of application:
**01.08.84 Bulletin 84/31**

(84) Designated Contracting States:
**AT BE CH DE FR GB IT LI LU NL SE**

(71) Applicant: **North Investment Finance Company Limited
Wellington House 17 Union Street
Jersey (Channel Islands)(GB)**

(72) Inventor: **Ráatz, Gábor János
P.O. Box 336
NL-6700 AH Wageningen(NL)**

(74) Representative: **Menting, Lamert Johannes et al,
OCTROOIBUREAU VRIESENDORP & GAADE P.O. Box
266
NL-2501 AW The Hague(NL)**

(54) An industrial onion peeler.

(57) Industrial peeler for onions, or like bulbous and tuberous vegetal produce, wherein the onions (1) are caused to spin about a vertical axis of rotation, having a rough layer (31,32) on the strap or conveyor belt (2,5) of the orienting unit (R) and on the conveyor belt (15) of the mechanism for notching and blowing away the peelings.

The mechanism preferably comprises two rolls (37,38,40,41) having a divided diabolo game's toy shape, whereby the freely rotatable upstream diabolo game's toy shaped halves (37,38) have a smooth surface whereas the driven downstream halves (40,41) have a corrugated surface.

FIG. 1

-1-

AN INDUSTRIAL ONION PEELER

The present invention relates to an industrial peeler for onions or the like bulbous and tuberous vegetations, substantially consisting of a store bunker, at least one orienting unit in which the onions are caused to spin about a substantially vertical axis of rotation, extending along the tail and root, with the aid of at least one endless resilient means, as well as further mechanisms for cutting off the tail and roots, notching and blowing away the peelings, and separating the useful material from the waste material.

Such a machine is known from Dutch patent applications 79 01614 and 80 00484.

At times it appears that causing the onions to spin about a vertical axis of rotation is a complete success, but then again approximately half the quantity of the onions remain in a horizontal position with their axis of rotation that extends through the tail and root, so that the latter are cut off "in the wrong way". The tail and root are not removed by the machine then, and it is matter of economic consideration whether this incorrectly cut off onion has to be considered as waste material, or whether it has to be peeled again by hand. With respect to the above it has to be taken into consideration that onions are products of nature which, even after being sorted out as to their largest external dimension, do not necessarily show a constant geometry, like a length/diameter ratio.

An industrial onion peeler has usually a number of parallel process paths and it should satisfy three parameters:
- it should achieve a certain yield per path, for instance more than sixty onions per minute per process path,
- the loss peelings should not exceed a certain percentage of the initial weight, it should for instance not exceed 30%, in which respect it is noted that when peeling by hand the loss in peelings is approximately 10%, and
- the percentage of additional peeling, i.e. the percentage of onions that leaves the machine without being completely processed, may not exceed 25%.

It is assumed that one of the reasons why the known machines were never able to satisfy said parameters, is the humidity of the ambient air or the humidity of the onions. The known machines also have the drawback that the jet of air, intended for blowing away the peelings, may even disturb the orienting process of the onions. This problem can be solved though by making the machine much longer, but in many cases that is no acceptable solution.

The invention tends to solve the above mentioned drawbacks in a relatively simple manner, so without the necessity of high investment for the control of the humidity of the ambient air, and without making the machine longer then is necessary for mounting the various components therein.

It appeared that the first mentioned object can be achieved in principle by the characterizing feature that the, at least one, resilient means of the orienting unit comprises a strap or conveyor belt which is provided with a rough layer, while also on the conveyor belt of the mechanism for notching and blowing away the peelings a rough layer is provided.

The endless conveyor belts of the orienting/unit are placed obliquely, and they have a trapezoidal ridge at the lower side, so that that part of the endless conveyor belt which causes the onions to spin, can be guided by a lath, which is provided with a groove for slidingly supporting this ridge.

The conveyor belt of the mechanism for notching and blowing away the peelings moves in a vertical plane, as is usual, but it also has a trapezoidal ridge at the rear side.

A possible embodiment of the conveyor belts is characterized in that the rough layer consists of carborundum granules which are secured to the conveyor belt by means of an adhesive layer. The conveyor belts are preferably made of rubber, the adhesive layer consists of ropane and the granules have a particle size between 30 and 70.

The second mentioned object is achieved in principle by the characterizing feature that the mechanism for notching and blowing away the peelings consists of a housing with two rolls, rotatable about vertical axes, between which a notch blade and a blow nozzle are arranged.

Preferably the rolls show a divided diabolo-like shape, and the upstream, freely rotatable diabolo halves have a smooth surface, whereas the downstream, driven diabolo halves have a corrugated surface.

On the shaft of the downstream diabolos a pulley disk may be placed, while a strap may be wrapped about said disk, that is driven by the shaft of the cutting mechanism.

The notch blade is connected to the housing via a leaf spring, and after the notch blade is compressed by an onion, said leaf spring closes a circuit which switches on, with time delay, a drive member to turn the housing away for a short period of time.

Said circuit activates preferably also the blow nozzle, said activation being terminated after the housing has been turned back to its original position.

It is also possible that a sensor is provided, detecting the last onion of a group, and closing a circuit which switches on, with time delay, a drive member to turn the housing away for a short period of time.

In an alternative embodiment the cutting mechanism consists of two level-adjustable stab blades, the level adjustment being dependent upon the height of an onion which is determined with the aid of photocells which are mounted upstream of these blades. The advantage of this alternative embodiment is, that the ratio between useful product and waste is even improved because with this processing manner hardly any useful product is found in the waste material. A further improvement of the above is possible when the feature is used that the blades are mounted in such an oblique position, that the wooden part of the onion next to the root is cut out.

The mechanism for separating the useful material from the waste material may comprise a tray in which two drums rotate in opposite directions, while over the drums a hook-like cover plate is arranged.

Only by using the features, prescribed in principle, it is possible to provide an industrial onion peeler with a yield of more than sixty onions per minute per path, and to let it satisfy the other two parameters as well.

The invention will be further elucidated hereinafter on the basis of the drawing, in which by way of example a number of embodiments of an industrial onion peeler in accordance with the invention has been illustrated. In the drawing is illustrated by:

Fig. 1 a schematic plan view of a part of a path of an industrial onion peeler,

fig. 2 at a larger scale a cross-section of an embodiment of the conveyor belts of the orienting unit and of the conveyor belt which belongs to the cutting and notch mechanism,

fig. 3 at a larger scale in perspective the pivotable housing for notching and blowing away the peelings of the onions,

fig. 4 an other embodiment of the blades for cutting off the tails and roots of the onions, and

fig. 5 a cross-section of the separating mechanism along line V-V of fig. 1.

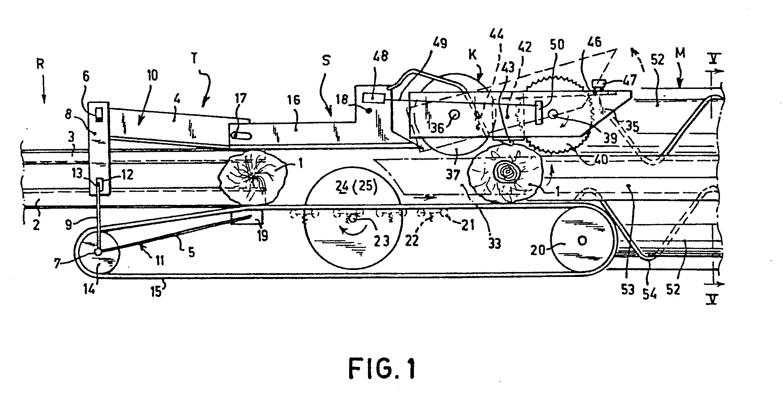

In the machine as illistrated in fig. 1 the onions 1 move from the left to the right in the drawing. At the left in fig. 1 the orienting unit R is situated, therein the onions are caused to spin about a vertical axis of rotation by means of endless belts or tapes 2 and 3, driven at various speeds. When the longitudinal speed of the conveyor belt 2 is supposed to be x, the longitudinal speed of the conveyor belt 3 is preferably approximately -x/2. Then

**0114715**

the onions arrive in a funnel-shaped transition section T to the cutting mechanism S, said transition section being able to adapt itself to the exterior sizes or (sometimes irregular) diameters of the onions in a sufficiently wide area, such that the plane of the spinning axes of the onions can move on rectilinearly. For that purpose the transition section T is provided with a guide of the pantograph type in which two arms 4 and 5 of the same size always rotate about the same angle around the shafts 6 and 7, as said arms are fixedly connected to bars 8 and 9, so that levers 10 and 11 are created, wherein the bar 8 of the one lever 10 has a slot 12, and the bar 9 of the other lever 11 has a pin 13. Furthermore also a guide roll 14 of an endless conveyor belt 15 rotates around the shaft 7. The same could in principle be valid for the shaft 6 opposite thereto, but in this embodiment a mechanism is selected, having only one endless conveyor belt 17 which cooperates with non-rectilinearly moving, oppositely disposed means, being successively a first bar, coinciding with the arm 4 of the pantograph guide, and a subsequent bar 16.

The subsequent bar 16 is pivotally connected to the arm 4 by means of a shaft 17, and the end, facing away from the shaft 17, is rotatably supported by a shaft 18. The guide plate 19 is located substantially symmetrical opposite the shaft 17, and secured to the end, facing away from the shaft 7, of the arm 5 of lever 11, said guide plate 19 forming a part of the guide assembly of the conveyor belt 15. This has been done to disturb the gradual transition of the orienting unit R to the cutting mechanism S as little as possible. Said guide assembly furthermore comprises at least one driven guide roll 20 and tensioning elements with rolls 21 and springs 22 which equally load the conveyor belt 15 in the direction of the bar 16.

Said tensioning elements may also be (not illustrated) air cylinders, pressing with a foot against the rear side of the conveyor belt 15.

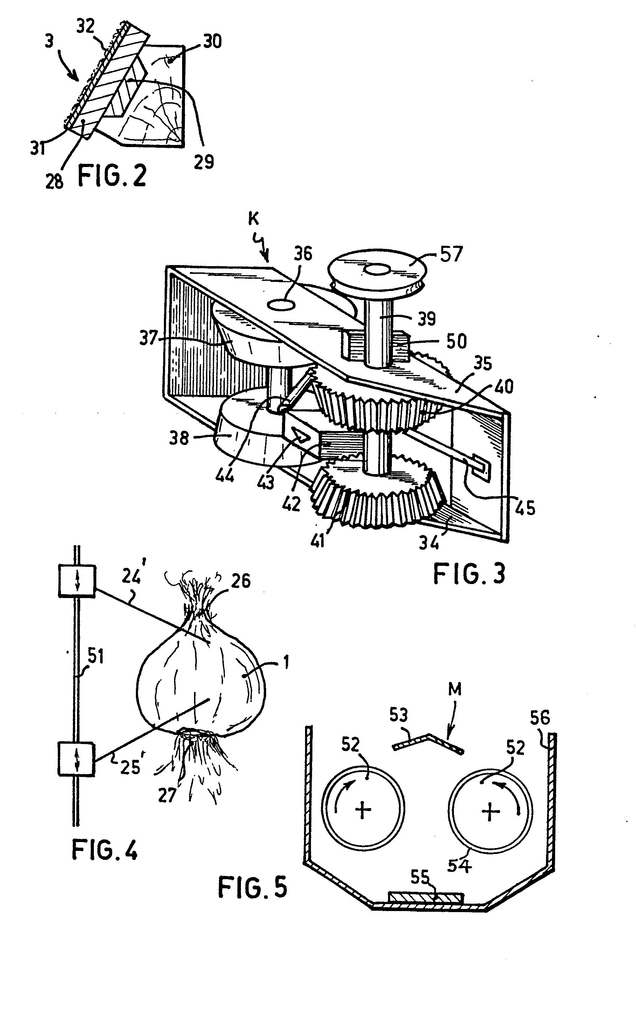

The above described structural details of the funnel-shaped transition section T make sure that the tail 26 and root 27 can be reliably removed from the onions by means of the cutting mechanism S of fig. 1 with knives 24 and 25 which are rotatingly driven by a shaft 23. The tail and root are visible in fig. 4, but the blades 24' and 25', illustrated there, are formed differently from the rotating knives of fig. 1, as will be elucidated later on.

The onions and the rotating blades 24 and 25 rotate in opposite directions, i.e. the onions rotate anti-clockwise and the rotating knives rotate clockwise, vide fig. 1. So the speed of the onions can be increased by the rotating knives. It is remarked that the distance between the guide plate 19 and the blades 24 and 25 should be as small as possible togive the onions as little possibility as possible to start spinning in another than the desired way.

The embodiment of the conveyor belts 2, 3 and 15, as illustrated in fig. 2, consists of a rubber or linen belt 28, having a ridge 29 at the inner or lower side, adapted to cooperate with the (not illustrated) pulleys of the orienting unit R and the guide rolls 14 and 20 to keep the conveyor belts in their correct tracks. The upper part is slidingly supported between said pulleys by means of a lath 30 with a groove, the appearance and dimensions matching the ridge 29, Said lath should not protrude beyond the conveyor belt, as otherwise the spinning movement of the onions will be disturbed of course.

On the outer or upper side of the conveyor belt an adhesive layer 31 of ropane is visible, with the aid of which carborundum granules 32 are secured to the conveyor belt. An adhesive layer 31 of ropane seems to be sufficiently elastic to retain the carborundum granules all the same when they repeatedly pass around the pulleys. The particle size of the carborundum granules is preferably between the values of 30 (coarse) and 70 (finer), as used in the abrasive paper industry.

The conveyor belt 15 opposite the mechanism K for cutting, notching and blowing away, should also be formed in one of the above described ways, and with granules that are as coarse as possible, particle size 30 to 40.

However, also other belts, onto which a rough layer is applied, are covered by the scope of the claims, In this respect is thought of milled tapes and conveyor belts with small nails, but they are all much more expensive than the above discussed embodiment. In the above rubber or linen is mentioned as material for the conveyor belt, but it goes without saying that leather belts are also covered by the scope of the claims.

After the onions have been processed by the rotating knives, the onions all have the same "height" and so they can be passed inbetween two horizontal guide plates 33.

Subsequently the onions arrive in front of the mechanism K, which is most important for the invention and therefore it is illustrated at a lager scale and in perspective in fig. 3, said mechanism being designed for notching and blowing away the peelings of the onions. This mechanism K consists of a lower plate 34 and an upper plate 35 with (not illustrated) supports for a shaft 36 supporting two smooth and freely rotatable diabolo halves 37 and 38, and a shaft which supports two corrugated diabolo halves 40 and 41 which can be driven by a pulley or string disk 57, also placed on the shaft 39, for instance by a strap or string which is also wrapped around a belt or string disk on the shaft 23 of the rotating blades 24 and 25.

The diabolo halves 37/38 and 40/41 form guide rolls, and together with the conveyor belt 15 they form some kind of cage in which an onion should perform at least one revolution. The guide rolls are formed in a divided manner so as to create room for a notch blade 43, arranged on a holder 42 between the rolls and the halves, and an identically arranged blow nozzle 44. When it is required for the arrangement of the blow nozzle and/or the notch blade, the shaft 36 need not extend continuously. The holder 42 is placed on a spring leaf 45 (vide fig. 3) which is secured to the housing. When an onion contacts the notch blade, the leaf spring deflects and touches a point of contact 46 (fig. 1), by which a switch 47 is activated which, with a delay in time of approximately one revolution of an onion in that cage, i.e. after approximately 1/70 sec., loads an air cylinder 48, provided on the subsequent bar 16 to turn away the downstream diabolos 40 and 41 for a short period of time, so that the onion, which is exposed by the blow nozzle 44, can fall out of the cage. Otherwise the blow nozzle 44 also serves to remove from the conveyor belt peelings and juices which inevitably also stick to the conveyor belt during processing the onions. Turning the mechanism K to the position as indicated in fig. 1 with dotted lines, and the direct return to the position indicated in drawn lines there, takes place by rotations about the shaft 36, driven by a piston rod 49, which is rotatably connected to a block on the upper plate 35.

As the turning way and turning back should be performed within a very short period of time, the mechanism K should be constructed as light as possible. The notch blade 43 should have as small a mass as possible and it must be sufficiently loaded by the spring 45 to be adapted to also notch an onion with an irregular outer circumference.

In the above was assumed that the onions pass along the rotating blades 24 and 25 at a neat small mutual distance. For inexplicable reasons it seems to be often so in practice that the onions like to be processed in groups by the blades. Under these circumstances it seems better to keep the housing 34/35 in the position as indicated with drawn lines in fig. 1, and also to let the blow nozzle 44 remain active until the last onion of such a group has arrived in the cage. The onions push each other forward as it were, but it goes without saying that this is not done with the last onion of a group, and in order to prevent that more than only the skirt of the onion is peeled, the housing 34/35 should be turned away for a short period of time anyway. In this case the air cylinder 48 or other suitable drive should be activated by a sensor, which detects whether the last onion of a group has arrived at the cage. Such a sensor can be built in very well in the tensioning elements, suggested as an alternative for the rolls 21 and springs 22, if said elements are formed as air cylinders, or in the point of rotation 18.

It seems that the above push-on principle does not work with relatively harder onions, like biennial Hungarian onions. It appears that this problem can be solved by providing the shaft 39 of the corrugated diabolo halves 40 and 41 with its own drive. So by replacing the string disk 57 by a motor plus a brake, between which a slip coupling has been placed. Then the shaft can be stopped every now and then by tensioning the brake, so that the onion to be processed is discharged from the mechanism K under influence of the conveyor belt 15.

In fig. 4 an other embodiment of the cutting mechanism S is illustrated schematically. In said embodiment the rotating blades 24 and 25 of fig. 1 are replaced by non-rotating stab blades 24' and 25' which are positioned in such a converging way, that the tail 26 and the root 27 of the onion are not cut off straight, but that as it were a conical recess is made, so that only the wooden part of the onion directly under the root is cut out. In this case it is necessary indeed to place both blades at an angle, and to make a conical recess at the tail as well, notwithstanding the fact that there is no wooden part there, because considerably many onions are oriented with their root 27 upward. Because of this feature, however, the effective yield is increased anyway. The latter can even be improved by forming particularly the blade 24' such that it is adjustable in level over a guide bar 51, dependent upon an upstream determination of the height of the first arriving onion to be cut. Said level adjustment can be realized with the aid of (not-illustrated) photocells, which are placed upstream relative to the blades 24' and 25'.

A (not illustrated) possibility to make the upper blade 24 adjustable in level is formed by a downwardly loaded parallellogram hinge with an upwardly curved fork. The blade is placed just below the lowest point of the fork teeth, which blade may also be a small scythe which is loaded anti-clockwise by means of a helical spring. As the fork is pushed upward by the onions the same quantity of tail or root is cut off each onion, not dependent upon its length (here: height).

Finally the processed onions fall in a mechanism M for separating the useful material from the waste material. In fig. 1 and 5 said mechanism K consists of a tray 51 extending up to below the cutting mechanism S, and having a width which is sufficient to contain two drums 52, rotating in the direction of the arrow, which do, however, extend only up to the mechanism K. The room over the area between the two drums is covered by a roof-like cover plate 53 of resilient material, like rubber, so that there is no danger for the hands of the controlling person. Should said drums rotate in an opposite direction, the upper edge of the tray should be formed in a resilient manner. A helical thickening may be arranged around the drums 52. At the cutting mechanism S the tails and roots fall in the tray. The peelings can pass through the gaps between the drums 52 and the tray 56, the cover plate 53 respectively. A conveyor belt 55 extends under the bottom of the tray 56, which discharges the waste material from the machine preferably in a direction which is opposite to the discharge direction of the useful product. Said arrangement enables an efficient additional peeling process, because the controlling person has a good sight on the production and he can directly remove by hand possible roots, tails and peelings that have apparently not been removed by the machine.

A complete, industrial peeler is preferably formed with various processing paths, placed on a frame. In this case it is efficient to place a funnel-shaped transition section between the mechanism K and M, which combines the discharge from a number of processing paths to one stream of products to be controlled and possibly to be additionally peeled.

Other embodiments than those illustrated in the drawing are also covered by the scope of the claims.

-1-

C L A I M S

1. An industrial peeler for onions or the like bulbous and tuberous vegetations, substantially consisting of a store bunker, at least one orienting unit in which the onions are caused to spin about a substantially vertical axis of rotation, extending along the tail and root, with the aid of at least one endless resilient means, as well as further mechanisms for cutting off the tail and roots, notching and blowing away the peelings, and separating the useful material from the waste material, characterized in that the at least one, resilient means of the orienting unit (R) comprises a strap or conveyor belt (28) which is provided with a rough layer, while also on the conveyor belt (15) of the mechanism (K) for notching and blowing away the peelings a rough layer is provided.

2. A machine in accordance with claim 1, characterized in that the conveyor belts (23) are placed obliquely, and have a trapezoidal ridge (29) at the lower side, and that the part of the endless conveyor belt which causes the onions to spin, is guided by a lath (30) which is provided with a groove for slidingly supporting the ridge (29).

3. A machine in accordance with claim 1 or 2, characterized in that the conveyor belt (15) of the mechanism (K) for notching and blowing away the peelings also has a trapezoidal ridge at the rear side.

4. A machine in accordance with one of the claims 1-3, characterized in that the rough layer consists of carborundum granules (32) with a particle size between 30 and 70 which are

-2-

secured to the conveyor belt by means of an adhesive layer (31) of ropane.

5. A machine in accordance with claim 1, <u>characterized</u> in that the mechanism (K) for notching and blowing away the peelings consists of a housing (34, 35) with two rolls, rotatable about vertical axes, between which a notch blade (43) and a blow nozzle (44) are arranged.

6. A machine in accordance with claim 5, <u>characterized</u> <u>in that</u> the rolls have a divided diabolo-like shape, and that the upstream, freely rotatable diabolo halves (37, 38) have a smooth surface, whereas the downstream, driven diabolo halves (40, 41), have a corrugated surface.

7. A machine in accordance with claims 5 or 6, <u>characterized</u> in that the notch blade (43) is connected to the housing via a leaf spring (45), and after the notch blade is compressed by an onion, said leaf spring closes a circuit (47) which switches on, with time delay, a drive member (48) to turn the housing away for a short period of time, and that the circuit also activates the blow nozzle (44), said activation being terminated after the housing has been turned back to its original position.

8. A machine in accordance with claims 5 or 6, <u>characterized</u> in that a sensor is provided, detecting the last onion of a group, and closing a circuit (47) which switches on, with time delay, a drive member (48) to turn the housing away for a short period of time.

9. A machine in accordance with claim 1 or 5, <u>characterized</u> in that the cutting mechanism (S) consists of two level-adjustable stab blades (24', 25'), the level adjustment being dependent upon the height of an onion which is determined with the aid of photocells which are mounted upstream of these blades, said blades (24', 25') being mounted in such an oblique position, that the wooden part of the onion next to the root (27) is cut out.

10. A machine in accordance with claim 1, <u>characterized</u> in that the mechanism (M) to separate the useful material from the waste material consists of a tray (51) in which two drums (52) with a helically thickened part (54) rotate in opposite directions, while over the drums a hood-like cover plate (53) of resilient material, like rubber, is arranged.

FIG.1

FIG. 2

FIG. 3

FIG. 4

FIG. 5

European Patent
Office

**EUROPEAN SEARCH REPORT**

0114715
Application number

EP 84 20 0067

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | EP-A-0 033 180 (G.J. RAATZ) <br> * Whole document * | 1 | A 23 N 15/08 |
| Y | FR-A-2 200 775 (M.P. VOGELAAR) <br><br> * Page 3, lines 14-21; page 3, lines 33-35; page 5, line 36 - page 6, line 9; figures 1-5 * | 1,3-5, 9 | |
| A | NL-A-7 607 502 (VOGLAR B.V.) <br> * Page 1, line 27 - page 2, line 7; page 4, line 25 - page 5, line 12; page 7, line 28 - page 8, line 3; figures 4,6 * | 1,5-7 | |
| A | NL-A-7 513 320 (C. SINKE) <br> * Page 6, line 30 - page 7, line 17; figures 1,6,7,10,11 * | 1,10 | **TECHNICAL FIELDS SEARCHED (Int. Cl. ³)** |
| D,A | NL-A-7 901 641 (G.J. RAATZ) | | A 23 N <br> B 07 B |
| A | US-A-2 350 691 (C. MAURDNER) | | |
| A | FR-A-2 166 490 (NAVARRO GALLEGO) | | |

The present search report has been drawn up for all claims

| Place of search <br> THE HAGUE | Date of completion of the search <br> 12-03-1984 | Examiner <br> NEHRDICH H.J |
|---|---|---|